# EUROPÄISCHE PATENTANMELDUNG

(11) **EP 4 195 039 A1**
(43) Veröffentlichungstag der Anmeldung: **14.06.2023**
(21) Anmeldenummer: 21213443.1
(22) Anmeldetag: 09.12.2021
(51) Int. Cl.: G06F 9/448, G06Q 10/06, G06F 8/20

(54) **COMPUTERIMPLEMENTIERTES VERFAHREN ZUR SYSTEMBESCHREIBUNG UND COMPUTERSYSTEM AUF EINER ATOMAREN BASISSTRUKTUR SELBSTÄHNLICHER KOMPONENTEN**

(71) Anmelder: Siemens Aktiengesellschaft, 80333 München (DE)
(72) Erfinder: Horn, Stefan, 91056 Erlangen (DE); Hornung, Regina, 91052 Erlangen (DE); Sand, Manfred, 90762 Fürth (DE); Maier, Rupert, 91330 Eggolsheim (DE)
(74) Vertreter: Siemens Patent Attorneys

(57) **Zusammenfassung**

In dem computerimplementierten Verfahren und System können Systembeschreibungen automatisiert erstellt und organisiert werden. Es wird eine standardisierte Basisstruktur zur Beschreibung einzelner Komponenten eines Systems gebildet, so dass alle Komponenten selbstähnlich sind. Die Beschreibung erfolgt durch Konfektion aus einem vordefinierten Bestand an Merkmalen, Aggregationsvorschriften und Querbezügen. Dann erfolgt die Editierung der Systembeschreibung. Das System wird zunächst hierarchisch in einzelne Komponenten und Subkomponenten bis zu einer Basisstruktur aufgeteilt und die einzelnen Komponenten und Subkomponenten beschrieben. Die Beschreibungen der einzelnen Komponenten bilden durch Definition und Kombination die hierarchische Systembeschreibung. Nach einer automatisierten Entgegennahme projektrelevanter Informationen, erfolgt die Analyse der Komponenten durch einen rekursiven Algorithmus und Ableitung der für die Systembeschreibung erforderlichen Kennzahlen, wobei die Definition von Aggregationsvorschriften zu einzelnen Komponenten und deren Subkomponenten derart erfolgt, dass die Aggregationsvorschriften beschreiben, wie die Merkmale über Subkomponenten hinweg aggregiert werden können, so dass eine automatisierte Berechnungen ausgeführt wird und Analyseergebnisse zum Wissenstand des zu beschreibenden Systems erzeugt werden. Schließlich werden Systembeschreibungsdaten entsprechend vorgegebenen Vorschriften in bestimmten Formaten automatisiert ausgegeben.

## Beschreibung

Die vorliegende Erfindung betrifft ein computerimplementiertes Verfahren zur Erstellung einer Systembeschreibung basierend auf einer atomaren Basisstruktur selbstähnlicher Komponenten sowie ein Computersystem zur Ausführung der automatisierten Erstellung der Systembeschreibung.

### Stand der Technik

Aktuell ist es in der Entwicklung von Softwareprodukten eine große Herausforderung ein neu zu implementierendes Softwareprodukt mit seinen Anforderungen so zu beschreiben, dass das entwickelte System nicht im Nachhinein erst beurteilt werden kann, was die Erfüllung von technischen Anforderungen und Design angeht. Gerade bei komplexen Softwaresystemen ist eine lückenlose Beschreibung der Anforderungen an ein neu zu implementierendes System genauso aufwendig und teuer wie die Entwicklung selbst.

Nicht nur im Vorfeld einer Softwarenentwicklung, sondern auch während der Entwicklung und Pflege komplexer Softwaresysteme ist stets ein Management erforderlich, welches einzelne Projekt- und Entwicklungsschritte zusammenbringt und koordiniert. Dieses Entwicklungsmanagement macht die Softwareentwicklung häufig ineffizient, intransparent und fehlerbehaftet.

Aktuelle Ansätze in der Softwareentwicklung nutzen ein zentrales, aber sequenzielles Entwicklungsmanagement unter Verwendung konventioneller Managementmodelle. Ein derartiger Ansatz, bei dem versucht wird im Vorfeld alle Anforderungen und Umfänge zu durchdenken und festzulegen, muss stets entsprechende Änderungsprozesse mitberücksichtigen, was es zu einer aufwendigen teuren und unflexiblen Vorgehensweise macht.

Bei einem agilen Softwareentwicklungsmanagement werden bislang Ziele und Anforderungen nicht konkret festgeschrieben und ein dezentraler Ansatz verfolgt, bei dem der Fokus auf einer Einzelkomponentenentwicklung liegt. Komplexere Systeme können so nicht optimal integriert werden.

Auch eine Trennung von Problem- und Solutionspace ist im Bereich der Softwareentwicklung nicht für komplexe Softwaresysteme geeignet. In allen Fällen führen spätere Korrekturen oder nachträgliche Designänderungen zu Inkonsistenz und Qualitätseinbußen.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung nachhaltig sein und frühzeitig interdisziplinäre Inkonsistenzen aufdecken.

Diese der vorliegenden Erfindung zugrundeliegenden Aufgaben werden durch ein computerimplementiertes Verfahren gemäß dem Patentanspruch 1 gelöst sowie durch ein Computersystem gemäß dem Patentanspruch 10. Vorteilhafte Ausgestaltungen der Erfindung sind Gegenstand der Unteransprüche.

### Beschreibung der Erfindung

Das erfindungsgemäße computerimplementierte Verfahren zur Systembeschreibung - ausgehend z.B. vom Kundennutzen - umfasst das Bilden einer standardisierten, atomaren Basisstruktur zur Beschreibung einzelner Komponenten eines Systems, sodass alle Komponenten selbst ähnlich sind, wobei die Beschreibung durch Konfektion aus einem vordefinierten Bestand an Merkmalen, Aggregationsvorschriften und Querbezügen erfolgt, des Weiteren die Editierung der Systembeschreibung, wobei das System zunächst hierarchisch in einzelne Komponente und Subkomponente bis zu einer atomaren Basisstruktur aufgeteilt wird und die einzelnen Komponenten und Subkomponenten beschrieben werden, wobei die Beschreibungen der einzelnen Komponenten und Subkomponenten dann durch Definition und Kombination die hierarchische Systembeschreibung bilden. Das Verfahren umfasst des Weiteren die Entgegennahme projektrelevanter Informationen, welche automatisiert aus anderen Softwaremodulen erfolgt sowie die Einsortierung der projektrelevanten Informationen an die passenden Stellen des Systembeschreibung, wobei die automatisierte Abarbeitung semantisch beschrieben wird, wie, wann und welche Daten automatisch aus welchem Softwaremodul oder Datenrepository zu übernehmen sind. Das erfindungsgemäße Verfahren umfasst darüber hinaus die Analyse der Komponenten durch einen rekursiven Algorithmus und die Ableitung der für die Systembeschreibung erforderlichen Kennzahlen, wobei die Definition von Aggregationsvorschriften zu einzelnen Komponenten und deren Subkomponenten derart erfolgt, dass die Aggregationsvorschriften beschreiben, wie die Merkmale über Subkomponenten hinweg aggregiert werden können, sodass eine automatisierte Rechnung über alle Komponenten und Subkomponenten der Systembeschreibung ausgeführt wird und Analyseergebnisse zum Wissensstand des zu beschreibenden Systems erzeugt werden. Schließlich umfasst das Verfahren noch die automatisierte Ausgabe von Systembeschreibungsdaten entsprechend einer vorgegebenen Vorschrift in bestimmten Formaten.

Die Zerlegung eines komplexen Systems geschieht also auf Basis einer selbstähnlichen Zerlegungsvorschrift. Dadurch wird gewährleistet, dass einheitliche Datenformate sowie einheitliche Vorgehensweise auf allen Ebenen des Systems vorliegen, denn alle Einzelteile verwenden dann wieder dieselben Zerlegungsvorschriften. Dies hat den Vorteil, dass so ein sukzessives Hinzufügen neuer Systemteile von nahezu beliebiger Komplexität erfolgen kann.

Unter einer Systembeschreibung im Kontext der Anmeldung ist eine Information zu verstehen über die in einem System vorhandenen Elemente und deren Verbindungen zueinander. Beispielsweise kann ein System verschiedene Komponenten, Module aus Hardware als auch Software umfassen.

Unter dem Begriff standardisierte atomare Basisstruktur ist zu verstehen eine identische Beschreibung einzelnen Komponenten, sodass auf eine einheitliche Weise Abhängigkeiten und Merkmale beschrieben sind.

Der Begriff selbstähnlich im Kontext der Anmeldung bedeutet, eine Strukturierungsvorschrift eines Objekts ist dann selbstähnlich, wenn sie das Objekt durch das Zusammenspiel von Teilobjekten beschreibt, deren eigene Strukturierungsvorschrift den gleichen Aufbau hat, wie die des Objektes. Derartige selbstähnliche Strukturierungsvorschriften können mittels rekursiver Algorithmik in unendlicher Komplexität und Tiefe aufgebaut und automatisiert untersucht werden.

Ein rekursiver Algorithmus ist eine Berechnungsvorschrift, welche auf Teilergebnisse zurückgreift, die durch Anwendung derselben Berechnungsvorschrift entstehen.

Aggregationsvorschriften sind beispielsweise Addieren, Bilden eines Minimums oder Maximums, Bilden eines Querschnitts oder ähnliches.

Das erfindungsgemäße computerimplementierte Verfahren hat u.a. die Vorteile, dass einzelne selbstähnliche Subkomponenten eines beliebig komplexen Systems beschrieben werden können. Das Verfahren ermöglicht daher die Betrachtung beliebiger Merkmale wie zum Beispiel Kundennutzen, Kosten, Bearbeitungsdauer, Lieferzeit oder Personalbedarf. Das Verfahren deckt insbesondere Inkonsistenzen auf und ermöglicht somit eine frühzeitige und umfassende Steuerung. Das beschriebene Verfahren ermöglicht eine flexible, generische, crossfunktionale und interdisziplinäre Struktur zu Komponentenbeschreibung zu einem frühen Zeitpunkt in der Systementwicklung. Das umfasst sowohl die Budgetdefinition als auch das Reporting und Controlling über die Zeit. Dadurch ist eine budgetschonende und frühzeitige Gegensteuerung bei Aufdecken von Inkonsistenzen möglich.

In einer vorteilhaften Ausführungsform der Erfindung umfasst das computerimplementierte Verfahren eine standardisierte Definition von Querbezügen zu anderen Subkomponenten. Die auf Basis des beschriebenen Verfahrens entstehenden Systembeschreibungen basieren somit auf Daten des Problem- und Lösungsbereichs und die Kombination dieser Daten führt zu einer baumförmigen Systemarchitektur, die aber in der Lage ist, Querbezüge zwischen Komponenten zu beschreiben und zu berücksichtigen.

In einer weiteren vorteilhaften Ausführungsform der Erfindung wird in dem computerimplementierten Verfahren jede der einzelnen Komponentenbeschreibungen in sich abgeschlossen und kann selbstständig betrachtet werden. Definitorische Vorschriften können in jeder Komponente vorliegen. Diese legen mit Hilfe des vorhandenen Vererbungsmechanismus fest, auf welche Art die darunter liegenden Subkomponenten beschrieben und behandelt werden müssen, zum Beispiel bezüglich welcher Merkmale beschrieben und behandelt werden müssen.

In einer weiteren vorteilhaften Variante des computerimplementierten Verfahrens, werden Abhängigkeiten zu anderen Komponenten auf der jeweils übergeordneten Komponentenebene definiert und in die unterlagerte Komponente gespiegelt. Eine Abhängigkeit zwischen Subkomponenten wird also auf der übergeordneten Systemebene mittels Konfektion von Beiträgen der Subkomponenten beschrieben. Diese Beiträge wiederum, werden innerhalb der Subkomponenten ebenfalls beschrieben, also gespiegelt. Auf diese Weise wird erreicht, dass Abhängigkeiten nur entlang der Beziehung Komponente zu Subkomponente entstehen und nicht über Komponentengrenzen hinweg.

Das computerimplementierte Verfahren zeichnet sich also insbesondere dadurch aus, dass das Zusammenwirken einzelner Komponenten und das für das Verständnis relevante Gesamtsystemverhalten mittels rekursiver Anwendung eines Auswertungsalgorithmus, der nur den Zusammenbau einer Ebene beschreibt, vollständig und in beliebiger Komplexität ermittelbar ist. Das vorgeschlagene computerimplementierte Verfahren hat also die Möglichkeit Systembeschreibungen zu erschaffen, welche sich automatisiert analysieren lassen, sodass genau die Daten aus der Systembeschreibung ableitbar sind, welche für einzelne ausgewählte Managementaufgaben erforderlich sind. Solche Datenableitungen liefert der rekursive Algorithmus, welcher nicht nur die einzelnen Aspekte einzelner Komponenten, sondern gleichzeitig damit auch die des gesamten beschriebenen Systems berücksichtigt.

Vorteilhafterweise wird bei dem computerimplementierten Verfahren vom rekursiven Algorithmus die Rekursionsvorschrift berücksichtigt, dass alle Pfade durchlaufen werden müssen. In besonders vorteilhafter Ausführungsform wird bei dem computerimplementierten Verfahren vom rekursiven Algorithmus die Rekursionsvorschrift berücksichtigt, dass das Aggregieren der Zahlenwerte oder anderer aggregierbarer einzelner Merkmale in den durchlaufenen Komponenten erfolgt. In einer weiteren vorteilhaften Ausgestaltung der Erfindung wird vom rekursiven Algorithmus die Rekursionsvorschrift berücksichtigt, dass Abhängigkeiten über Referenzbildung zwischen Aufgaben innerhalb einer Komponente definiert werden. Insbesondere wird die Rekursionsvorschrift berücksichtigt, dass einzelne Merkmale nur in Verbindung mit bestimmten Datenkonstellationen aktiv oder für bestimmte Berechnungen berücksichtigt werden. Eine bestimmte zu berücksichtigende Berechnung ist insbesondere eine bestimmte Aufgabe, welche nur unter bestimmten Bedingungen anfällt.

Unter dem Begriff Merkmal ist im Kontext der Anmeldung ein algorithmisch verwertbares Attribut eines Objekts zu verstehen, wie etwa Zahlen, Zeichenketten, Listen oder dergleichen, welche eine inhaltliche Bedeutung für die Beschreibung des gesamten Systems besitzen. Solche Merkmale werden auch als Value-Werte bezeichnet.

Unter einer Datenkonstellation ist insbesondere eine Referenz auf andere Merkmale zu verstehen.

Das beschriebene erfindungsgemäße computerimplementierte Verfahren und seine vorteilhaften Ausgestaltungsformen haben den Vorteil eine hinreichende Planungssicherheit für eine Systementwicklung zu gewährleisten, indem genau so viel beschrieben wird, wie es für die Entwicklung notwendig ist, dennoch nötige Freiheitsgrade zur Detailausgestaltung offengelassen werden können. Beispielsweise existieren keine festen zeitlichen Vorgaben, wann welche Information zur Detaillierung einzelner Subkomponenten des Systems spezifiziert werden. Eine Auswertung kann immer auf Basis bereits vorhandener Daten erfolgen und jederzeit wiederholt werden. Das Management eines einzelnen zugrundeliegenden Projekts kann beispielsweise auf eine System- bzw. Projektdetaillierung beruhen, welche "on the fly" zu diesem Zweck nur die jeweils benötigten Merkmale und Querbezüge definiert. Mittels derartigen Vorgehens können Auffälligkeiten einer Systemstruktur relativ leicht erkannt werden und ein Gegensteuern ist genau dort möglich, wo es erforderlich ist. Gleichzeitig wird eine überflüssige Informationsanreicherung vermieden.

Ein erfindungsgemäßes Computersystem zur Ausführung eines Verfahrens zur Systembeschreibung, wie oben beschrieben, weist auf, ein Speichermodul zu Ablage der Systembeschreibung, ein Softwaremodul zur Editierung der Systembeschreibung, wobei das System zunächst hierarchisch in einzelne Komponenten und Subkomponenten bis zu einer atomaren Basisstruktur aufgeteilt wird und die einzelnen Komponenten und Subkomponenten beschrieben werden, wobei die Beschreibung der einzelnen Komponenten und Subkomponenten dann durch Definition und Kombination die hierarchische Systembeschreibung bilden, ein Softwaremodul zur Organisationseditierung mit einer Funktionalität zum Importieren, Umkopieren und Organisieren von Systembeschreibungskomponenten, ein Empfangsmodul zur Entgegennahme projektrelevanter Informationen, automatisiert aus anderen Softwaremodulen und zur Einsortierung an die passenden Stellen der Systembeschreibung, wobei für die automatisierten Abarbeitung semantisch beschrieben wird wie, wann und welche Daten automatisch aus welchem Softwaremodul oder Datenrepositories zu übernehmen sind. Ein Analysemodul, welches automatisiert Berechnungen über alle Komponenten und Subkomponenten der Systembeschreibung ausführt und Analyseergebnisse zum Wissensstand des zu beschreibenden Systems erzeugt sowie schließlich ein Ausgabemodul zur automatisierten Ausgabe von Systembeschreibungsdaten entsprechend vorgegebenen Vorschriften in bestimmten Formaten.

Ein Empfangsmodul ist insbesondere ein Input-Baustein zur Koppelung an andere Systeme, die projektrelevante Informationen zum beschriebenen Objekt liefern. Solche projektrelevanten Informationen können beispielsweise sein: Informationen zum Entwicklungsfortschritt einzelner Subkomponenten, zur Identifikation neuer Problembereiche, zum Wartungs- oder Pflegebedarf, zukünftigen Erweiterungen oder ähnlichem.

Unter dem Analysemodul ist ein rekursiver Merkmalsrechner zu verstehen bzw. umfasst das Analysemodul einen rekursiven Merkmalsrechner, welcher automatisiert Berechnungen über alle Komponenten und Subkomponenten der Systembeschreibung ausführt und Analyseergebnisse zum Wissensstand des spezifizierten Systems erzeugt, das Berechnen der Analyseergebnisse ist jederzeit möglich. So kann beispielsweise sichergestellt werden, dass bei jeder Änderung der Systembeschreibung automatisch eine Neuberechnung "on the fly" stattfindet, sodass jederzeit aktuelle Analysedaten vorliegen. Das Analysemodul kann eine Hardwarekomponente sein, beispielsweise ein Prozessor oder Teil eines Prozessors bzw. im Sinne des rekursiven Merkmalsrechners in Verbindung mit einem Softwaremodul oder umfassend eine Software, die mittels eines Prozessors ausgeführt wird.

Das Ausgabemodul ist insbesondere ein Output-Baustein, der in der Lage ist, Systembeschreibungsdaten sowie Ergebnisdaten des rekursiven Merkmalsrechners entsprechend vorgegebenen Vorschriften automatisiert an andere Systeme auszugeben. Solche anderen Systeme sind beispielsweise Projektmanagementwerkzeuge wie MS-Projekt. Die Ausgabe erfolgt insbesondere in bestimmten Formaten, beispielsweise CSV, PDF, XLS, E-Mail oder andere.

Der Vorteil des beschriebenen Computersystems, insbesondere des Organisationseditors liegt darin, dass dieser der sukzessiven Konkretisierung und Komplettierung der resultierenden Systembeschreibung dient, zum Beispiel durch Einfügen existierenden Produktbeschreibungen, benötigter Subkomponenten oder das Ergänzen neuen Wissens zu einzelnen Komponenten ermöglicht.

In einer vorteilhaften Ausführungsform der Erfindung weist das Computersystem ein Softwaremodul auf, welches zur Editierung und Definition systemübergreifender Merkmale dient. Darunter ist insbesondere eine Änderung oder Löschung zu verstehen. In einer weiteren vorteilhaften Ausgestaltung weist das Computersystem ein Softwaremodul zur Editierung einer Beschreibung von Querbezügen zwischen einzelnen Subkomponenten auf, insbesondere auf Basis eines vordefinierten semantischen Vokabulars. Beispielsweise können das Informationen sein: "Erst nach Subkomponente X realisierbar" oder "Nur zusammen mit Subkomponente Y realisierbar" oder etwa "Überflüssig, wenn Subkomponente Z existiert" etc. Dies hat den Vorteil, dass die Beschreibung maschineninterpretierbar ist.

Unter dem Ausdruck Computersystem wird insbesondere verstanden jede Art von elektronischem Gerät mit Datenverarbeitungseigenschaften. Computer oder Computersysteme können somit beispielsweise Personal-Computer, Server, Handhelds, Poket-PC-Geräte, Mobilfunkgeräte und andere Kommunikationsgeräte sowie Prozessoren und andere elektronische Geräte zur Datenverarbeitung sein.

Im weiteren Sinn kann unter Computersystem auch ein Computernetz, Netzwerk, eine Netzwerkeinheit oder ein Cloud-Computing-System verstanden werden.

Vorteilhafterweise umfasst das erfinderische Computersystem eine flexible, generisch crossfunktionale und interdisziplinäre Struktur, die eine Komponentenbeschreibung zu einem frühen Zeitpunkt der Systementwicklung ermöglicht.

In einer weiteren vorteilhaften Ausgestaltung der Erfindung weist das Computersystem ein Ausgabemodul auf, welches ausgestattet ist, die Systembeschreibungsdaten entsprechend vorgegebenen Vorschriften an andere Systeme weiterzuleiten. Andere Systeme können sein Projektmanagementwerkzeuge wie beispielsweise MS-Projekt. Bestimmte Formate können sein CSF, PDF, XLS, E-Mail oder andere.

Das vorgeschlagene computerimplementierte Verfahren und das vorgeschlagene Computersystem zur Ausführung des Verfahrens ermöglicht somit die Definition eines neuen Softwaresystems, bei der eine sehr frühzeitige und crossfunktionale, das heißt interdisziplinäre Systembeschreibung das Management der Softwareentwicklung ideal unterstützt. Die so ermöglichte Systembeschreibung ist insbesondere generischer Natur, nutzt bestehendes Wissen aus dem Problem- und Lösungsbereich, ohne den Anspruch zu erheben bereits im Vorfeld komplett zu sein. Das beschriebene Verfahren beruht insbesondere auf einer fraktalen Zerlegung des zu betrachtenden Systems und dessen Systembeschreibung. Insbesondere wird ermöglicht ein Gesamtsystem konform zu bestehenden Standardlösungen auf Teilsystemebene zu designen. Dies verhindert, dass bei einer isolierten Betrachtung von Disziplinen, die eigentlich zusammengehören, der Blick auf das Ganze verlorengeht.

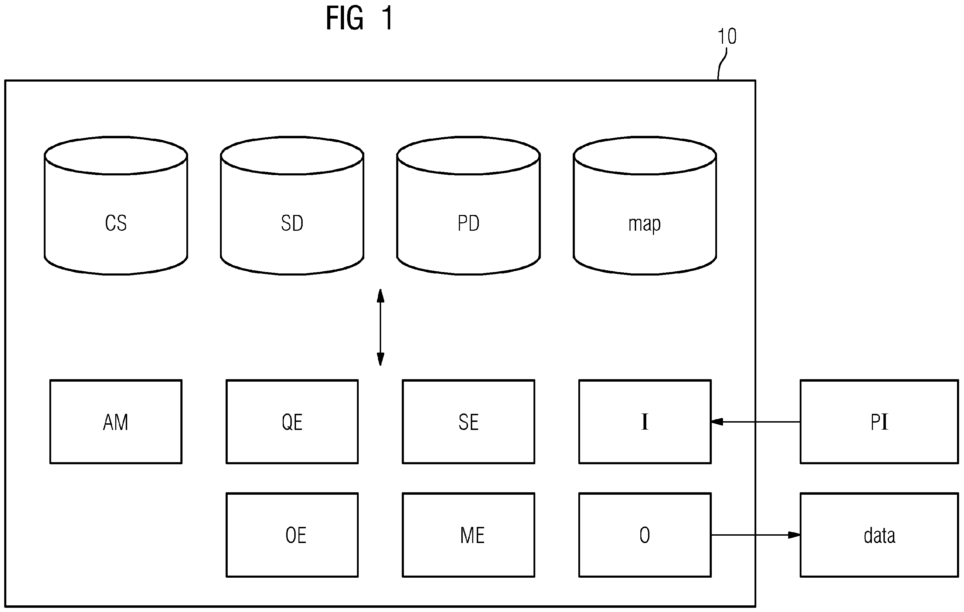

Figurenbeschreibung und Beispiele:
Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Die beiliegenden Figuren 1 bis 3 der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

Figur 1 zeigt schematisch das System 10 mit seinen Hardware- und Software-Komponenten, wie
beispielsweise die atomaren Basis- bzw. Komponentenstruktur CS, umfassend selbstähnliche
Komponenten C, wie z.B. Qualität, Kundennutzen Assignment oder Feature Assignment.

Das System weist zumindest eine I/O Komponente auf zur Entgegennahme I von beispielsweise projektrelevanten Informationen PI, Daten, z.B. Entwicklungswerkzeug GIT sowie zur automatisierten Ausgabe O, z.B. von Systembeschreibungsdaten data, insbesondere entsprechend vorgegebenen Vorschriften in bestimmten Formaten, z.B. Projektmanagement-Werkzeug MS Projekt, Polarion, TFS, backlog, VS Cards, TC/SAP, TcPCM. Zentraler Baustein ist der rekursive Merkmalsrechner AM, der den rekursiven Algorithmus ausführt. Das System 10 verfügt des Weiteren über wenigstens einen Speicher pre von vordefinierten Merkmalsdefinitionen, Aggregationsvorschriften und Querbezugsarten Q und Abbildungsvorschriften map für die Dauerein- und -ausgabe. Auch Produktbeschreibungen PD liegen vorteilhafter auf dem System 10 gespeichert vor. Außerdem umfasst das System Softwarekomponenten wie z.B. den Querbezugseditor QE, den Systembeschreibungseditor SE, den Organisationseditor OE und den Merkmalseditor ME.

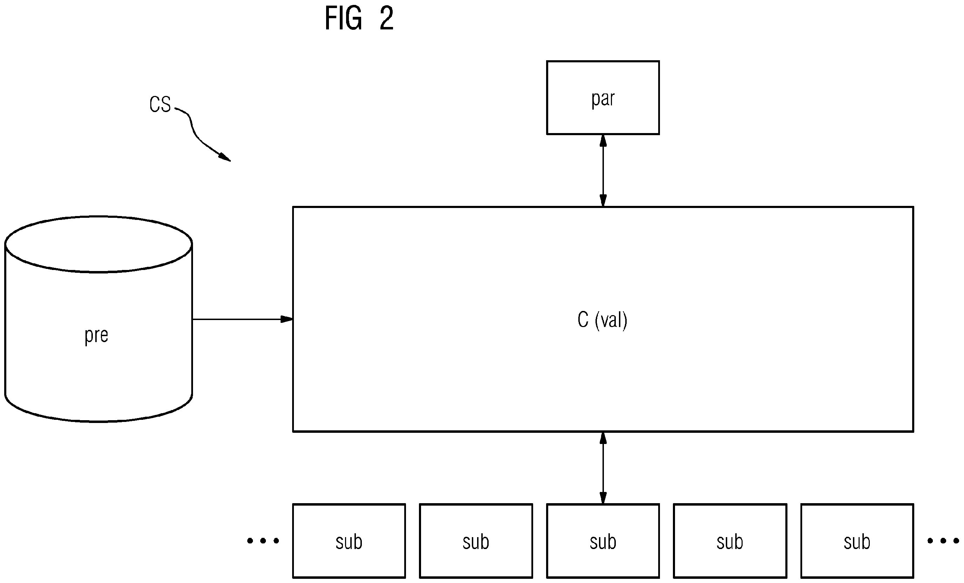

In Figur 2 sind schematisch die Beziehungen zu übergeordneten Elternkomponenten und
untergelagerten Kinderkomponenten dargestellt. Merkmale val, wie beispielsweise Kennzahlen,
werden z.B. definiert über einen Link zu vordefinierten Merkmalsdefinitionen pre. Merkmale können
z.B. sein: ein komponentenspezifischer Wert c(val), der manuell vorgegeben sein kann oder durch
Aggregation ermittelt werden kann, die anzuwendende Aggregationsvorschrift ist insbesondere für
eine Komponente C definiert. Eine Komponente C umfasst insbesondere auch eine Definition von
Querbezügen Q zwischen den unterlagerten Kindern, den Subkomponenten sub. Subkomponenten
sind z.B. Design, Budget, Leistungen, Ausführung, Plausibilität, Konsistenz, HW- und SW
Balancing, Guidelines, Abhängigkeiten, Planungsdaten und ihre Priorisierung, basierend auf
Geschwindigkeit, Zeitplanung, Mitwirkende, Fähigkeiten, Risiken u.a.

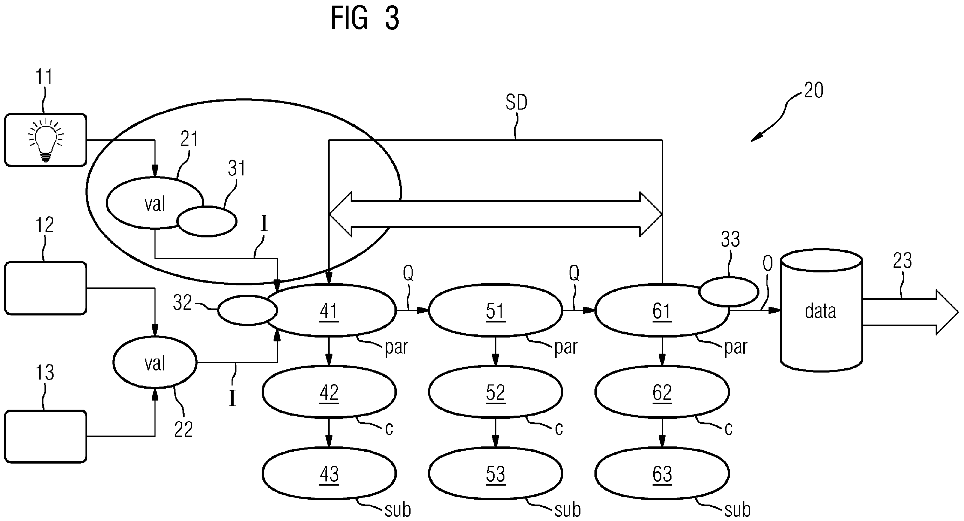

Figur 3 zeigt ein Diagramm zur Verfahrensdarstellung 20 von der Produktidee 11 bis zum Projektplan 23: Daten data, insbesondere zur Marktanalyse, Markt-Survey, insbesondere bezüglich Relevanz, Priorität und Vertragserfüllung (Fulfillment) 12, sowie CVE Benchmarks 13, aber auch übergreifende Merkmale der Idee 21 und kundenspezifische Merkmale 22, sogenannte Customer Values werden in das System 10 importiert I. Hierbei sind gewisse Kriterien 31, 32, 33 zu erfüllen bzw. Fragen zu beantworten, wie beispielsweise warum ein Produkt entworfen werden soll und wie es ausgestattet sein soll, was dann in Qualitätsmerkmalen 41 formuliert wird. Untermerkmale c, sub sind dazu beispielsweise Designmerkmale 42 sowie Budget- oder Kraftaufwandsabschätzungen oder Unternehmenskriterien 43. Horizontal setzt sich das Verfahren in der Formulierung von Wertzuweisungen 51 (Value Assignment) fort, welche wiederum untergeordnete Komponenten wie Plausibilitätsprüfung 52 und Konsistenzausgleich 53 aufweisen, insbesondere HW/SW Balancing, ein Abwägen ob der Kundennutzen günstiger in HW oder SW umzusetzen sei. Im weiter fortgeschrittenen Prozess erfolgt die Funktionszuweisung 61: Hierbei geht es um untergeordnete Values wie Richtlinien, Abhängigkeiten und Leistungen 62 sowie Priorisierung von Planungsdaten 63. Planungsdaten können z.B. basieren auf Kraftaufwand, Geschwindigkeit und Zeitplan, Fähigkeiten und Risiken, Mitwirkenden u. a. Merkmalen. Die Datenausgabe O schließlich umfasst Daten data zu TFS, Polarion, Backlog, VS Cards, TC/SAP oder TcPCM.

Bei diesem Vorgehen erfolgt eine optimierte Abwicklung von Projekten im Umfeld komplexer Systeme durch automatisierte Ermittlung aktueller Managementdaten par, c, sub. Minimal erforderlicher Aufwand zur Erstellung der Systembeschreibung. Durch die baumförmige Struktur entsteht eine übersichtliche, leicht und automatisiert handhabbare Systembeschreibung. Trotzdem können nicht hierarchische Aspekte problemlos über die Definition von Abhängigkeiten und Querbezügen beschrieben und auch analysiert werden. Änderungen an der Systembeschreibung werden automatisiert in der Datenbasis dargestellt und können dadurch jederzeit in jeder Ebene der baumförmigen Struktur durchgeführt werden. Durch die selbstähnlichen Detaillierungen tauchen Fragestellungen dort auf, wo sie auch behandelt werden können.

Im Folgenden sollen tabellarisch Momentaufnahmen zu zwei verschiedenen Beispiel-Systembeschreibungen dargestellt werden:

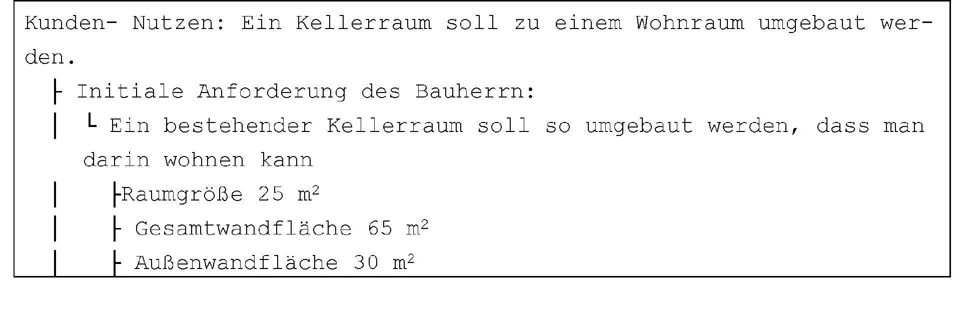

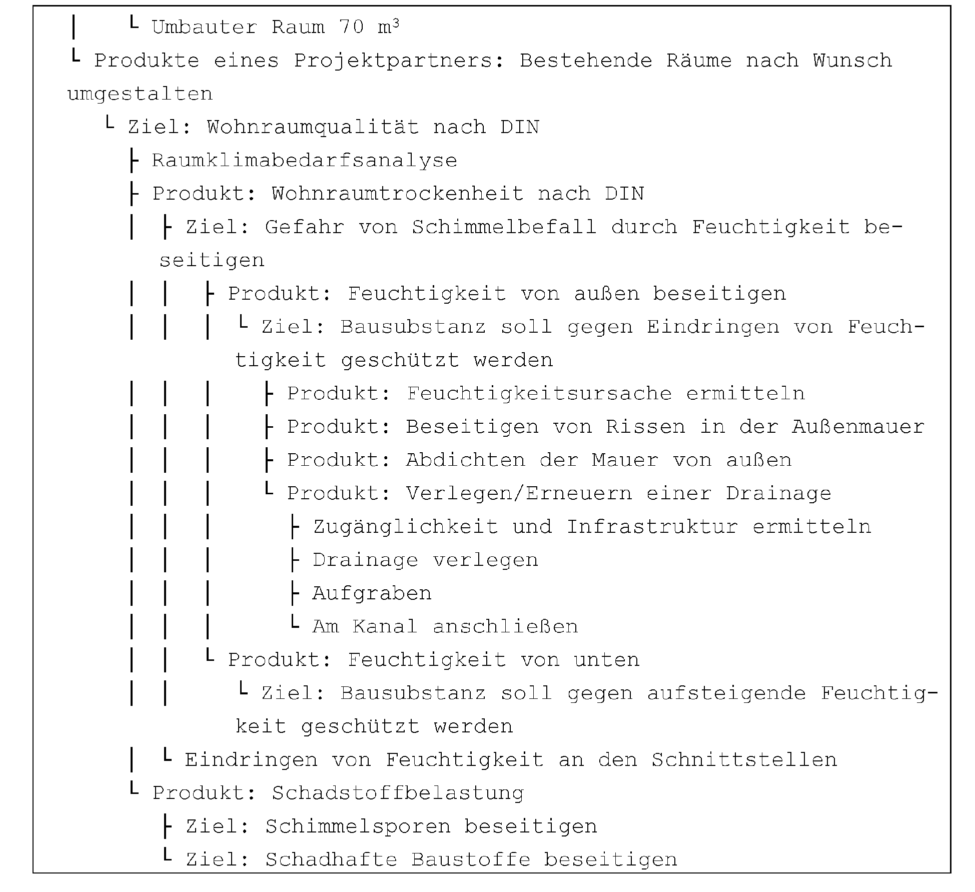

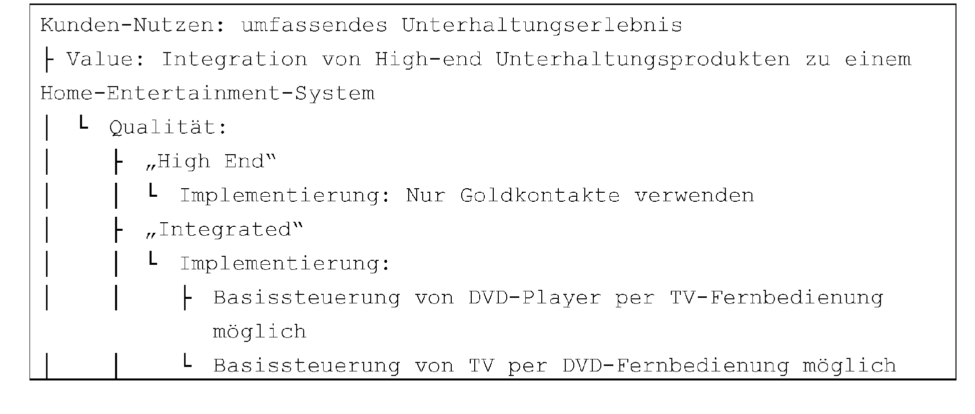

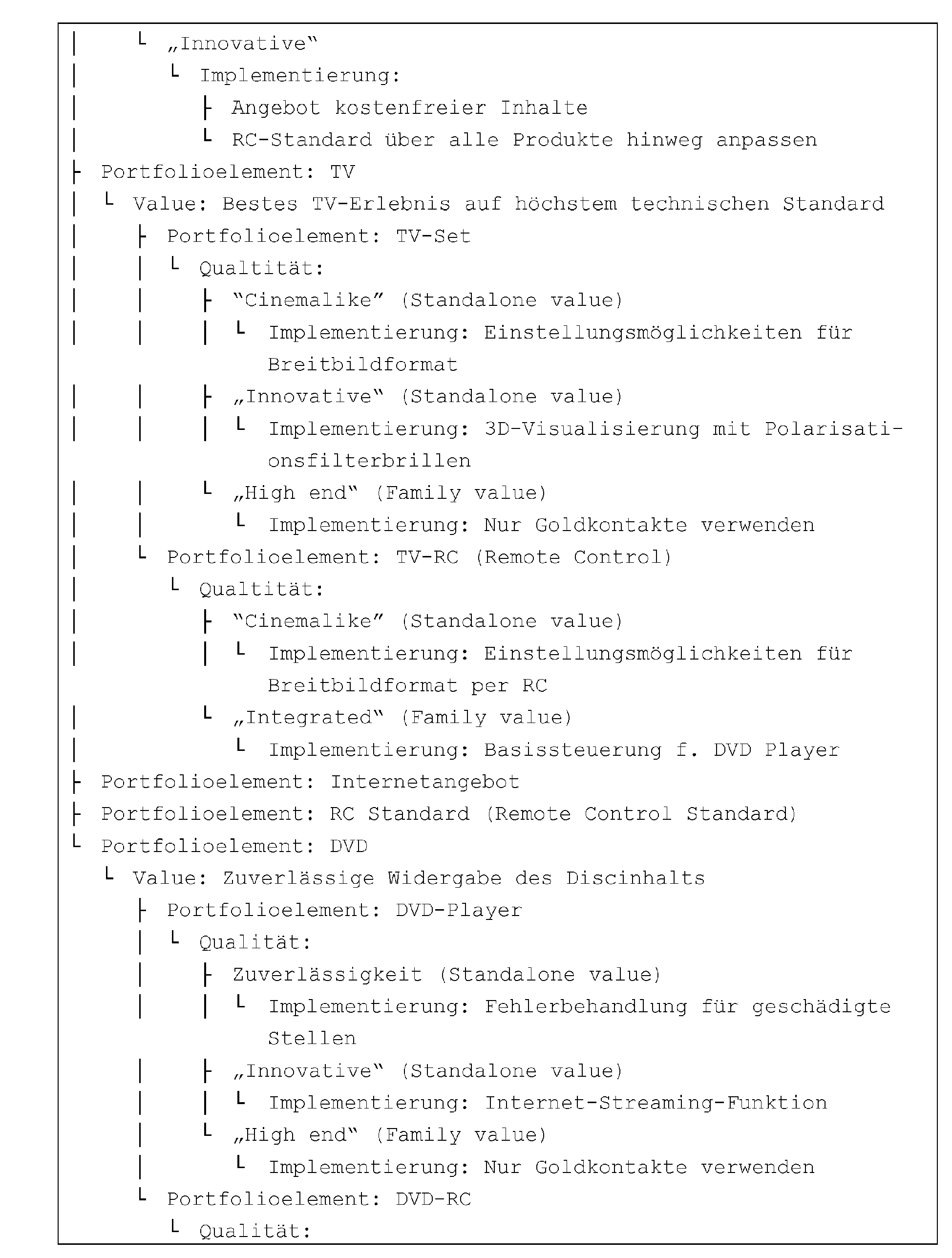

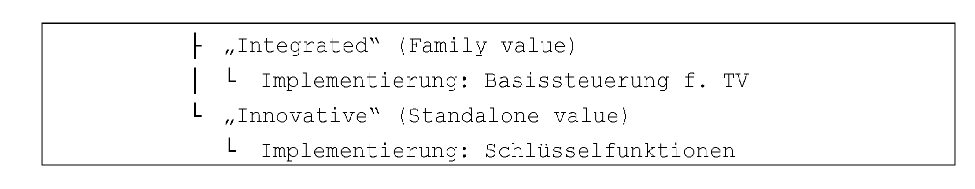

Die Definition eines neuen SW-Systems kann also im vorliegenden Fall ohne Produktmanager oder Systemarchitekten erfolgen. Eine falsche Beschreibung oder fehlerhafte Bewertung von Querbezügen und Abhängigkeiten der einzelnen Komponenten untereinander aufgrund fehlender Fachexpertise für die betroffene Subdomäne bleibt somit aus. Dies gilt auch, wenn eine umfangreiche Definition von Systemanforderungen erfolgt. Auch das Management der Projekte zu komplexen Systemen wird dadurch weniger aufwändig, weniger fehleranfällig, planbarer und überhaupt beherrschbar. Dies bezieht sich auf nahezu allen Disziplinen, wie z.B. die Entwicklung, Wartung und Vermarktung. Typische Merkmale, die im Management solcher Projekte betrachtet werden, sind beispielsweise Wert, Aufwand, Dauer, Kosten, Lieferzeit oder Personalbedarf.

Das erfindungsgemäße Vorgehen gewährleistet stets auch Folgeänderungen, so dass stets eine fundierte Aufwand-/Nutzenbetrachtung erfolgen kann.

Das erfindungsgemäße Vorgehen überwindet demnach bisherige Nachteile eines zentralen sequentiellen Managements, bei dem Änderungen ungeplant sind und der Umgang mit den Änderungen zu Mehrkosten, Terminverzug und oft auch zu Konflikten unter den Projektbeteiligten führt, unter Verwendung konventioneller Management-Modelle.

Dies ermöglicht eine neuartige, effizientere Art der Zusammenarbeit zwischen Projektpartnern innerhalb einer Firma aber auch Partnern verschiedener Firmen, da auf eine solidere Wissensbasis zur Entscheidungsfindung zugegriffen werden dann, da Wissen aus dem Problem- und Solutionspace gemeinschaftlich betrachtet und genutzt wird, statt es voneinander zu trennen. Einzelne Managementaufgaben können verlässlich "separat" aber auch "gemeinschaftlich" auf Basis einer gemeinsamen Datenbasis analysiert und betrachtet werden. Verschiedene Szenarien können problemlos und mit wenig Aufwand durchgespielt werden. Statt sich auf ein paar wenigen "Experten für Alles" verlassen zu müssen, die alles aufwändig im Vorfeld durchdenken und definieren, wird das Wissen vieler Einzelexperten genutzt, um Systementscheidungen zu treffen. Und statt viel Geld für Systembeschreibungen ausgeben zu müssen, wird sichergestellt, dass möglichst viel des vorhandenen Budgets für die eigentliche Projektarbeit zur Verfügung steht.

### Bezugszeichenliste:

- 10: Systemdarstellung
- 20: Verfahrensdarstellung
- 11: Produktidee, Idee
- 12: Marktanalyse, Markt-Survey, insbesondere bezüglich Relevanz, Priorität und Fulfillment (Vertragserfüllung)
- 13: CVE Benchmark
- 21: übergreifende Merkmale der Idee
- 22: Kundenspezifische Merkmale, Customer Values
- 31: Why?
- 32: How?
- 33: What?
- 23: Projektplan
- SD: Hierarchische Systembeschreibung
- CS: atomare Basisstruktur
- C: selbstähnliche Komponenten, wie z.B. Qualität, Value Assignment, Feature Assignment
- val: Merkmale, Kennzahlen, ein Merkmal wird z.B. definiert über einen Link zu vordefinierten Merkmalsdefinitionen (pre), ist z.B. ein komponentenspezifischer Wert, der manuell vorgegeben sein kann oder durch Aggregation ermittelt werden kann, die anzuwendende Aggregationsvorschrift ist insbesondere für eine Komponente (C) definiert, eine Komponenten (C ) umfasst insbesondere auch eine Definition von Querbezügen (Q) zwischen den unterlagerten Kindern, den Subkomponenten (sub)
- sub: Subkomponenten, wie z.B. Design, Budget, Leistungen, Ausführung, Plausibilität, Konsistenz, HW- und SW-Balancing, Guidelines, Abhängigkeiten, Planungsdaten und ihre Priorisierung, basierend auf Geschwindigkeit, Zeitplanung, Mitwirkende, Fähigkeiten, Risiken u.a.
- I: Entgegennahme
- PI: projektrelevante Informationen, Daten, z.B. Entwicklungswerkzeug GIT, frei verfügbares Open-Source System zur verteilten Versionierung von Softwareteilen
- AM: rekursiver Algorithmus, bzw. rekursiver Merkmalsrechner
- O: automatisierte Ausgabe, z.B. von Systembeschreibungsdaten
- data: Systembeschreibungsdaten, insbesondere entsprechend vorgegebenen Vorschriften in bestimmten Formaten, z.B. Projektmanagement-Werkzeug MS Projekt, Polarion, TFS (Team Foundation Server ist eine Applikation Lifecycle Management (ALM) Plattform von Microsoft), backlog, eine dynamische Liste von durchzuführenden Arbeitsaufträgen/Anforderungen, VS Cards, TC (Teamcenter: Product Lifecycle Management System (PLM-System) von Siemens), SAP (Software für die Steuerung von Geschäftsprozessen), TcPCM (Software für die Steuerung von Geschäftsprozessen)
- Q: Querbezüge
- pre: Speicher von vordefinierten Merkmalsdefinitionen, Aggregationsvorschriften und Querbezugsarten (Q)
- map: Abbildungsvorschriften für die Dauerein- und -ausgabe
- CS: atomare Komponentenstruktur
- PD: Produktbeschreibung
- QE: Querbezugseditor
- SE: Systembeschreibungseditor
- OE: Organisationseditor
- ME: Merkmalseditor
- I/O: Input-/Output-Baustein

## Patentansprüche

1. Computerimplementiertes Verfahren (20) zur Systembeschreibung, umfassend:
Bilden einer standardisierten, atomaren Basisstruktur (CS) zur Beschreibung einzelner Komponenten eines Systems, so dass alle Komponenten (C ) selbstähnlich sind, wobei die Beschreibung durch Konfektion aus einem vordefinierten Bestand (pre) an Merkmalen (val), Aggregationsvorschriften und Querbezügen erfolgt,
Editierung der Systembeschreibung (SD), wobei das System zunächst hierarchisch in einzelne Komponenten und Subkomponenten bis zu einer atomaren Basisstruktur aufgeteilt wird und die einzelnen Komponenten (C) und Subkomponenten (sub) beschrieben werden, wobei die Beschreibungen der einzelnen Komponenten und Subkomponenten dann durch Definition und Kombination die hierarchische Systembeschreibung (SD) bilden,
Entgegennahme (I) projektrelevanter Informationen (PI), automatisiert aus anderen Softwaremodulen und zur Einsortierung an die passenden Stellen der Systembeschreibung (SD), wobei für die automatisierte Abarbeitung semantisch beschrieben wird, wie, wann und welche Daten (PI) automatisch aus welchem Softwaremodul oder Datenrepository zu übernehmen sind,
Analyse der Komponenten (C ) durch einen rekursiven Algorithmus (AM) und Ableitung der für die Systembeschreibung (SD) erforderlichen Kennzahlen (val),
wobei die Definition von Aggregationsvorschriften zu einzelnen Komponenten (c) und deren Subkomponenten (sub) derart erfolgt, dass die Aggregationsvorschriften beschreiben, wie die Merkmale (val) über Subkomponenten (sub) hinweg aggregiert werden können, so dass eine automatisierte Berechnungen über alle Komponenten (C ) und Subkomponenten (sub) der Systembeschreibung (SD) ausgeführt wird und Analyseergebnisse zum Wissenstand des zu beschreibenden Systems erzeugt werden, automatisierte Ausgabe (O) von Systembeschreibungsdaten (data) entsprechend vorgegebenen Vorschriften in bestimmten Formaten.

2. Computerimplementiertes Verfahren (20) nach Anspruch 1, umfassend eine standardisierte Definition von Querbezügen (Q) zu anderen Subkomponenten (sub).

3. Computerimplementiertes Verfahren nach Anspruch 1 oder 2, wobei jede der einzelnen Komponentenbeschreibungen in sich abgeschlossen ist und selbständig betrachtet werden kann.

4. Computerimplementiertes Verfahren (20) nach einem der vorstehenden Ansprüche, wobei Abhängigkeiten zu anderen Komponenten (C) auf der jeweils übergeordneten Komponentenebene definiert werden und in die unterlagerten Komponenten (sub) gespiegelt werden.

5. Computerimplementiertes Verfahren (20) nach einem der vorstehenden Ansprüche, wobei der rekursive Algorithmus (AM) die Rekursionsvorschrift berücksichtigt, dass alle Pfade durchlaufen werden.

6. Computerimplementiertes Verfahren (20) nach einem der vorstehenden Ansprüche, wobei der rekursive Algorithmus (AM) die Rekursionsvorschrift berücksichtigt, dass das Aggregieren der Zahlenwerte oder anderer aggregierbarer einzelner Merkmale (val) in den durchlaufenen Komponenten (C ) erfolgt.

7. Computerimplementiertes Verfahren (20) nach einem der vorstehenden Ansprüche, wobei der rekursive Algorithmus (AM) die Rekursionsvorschrift berücksichtigt, dass Abhängigkeiten über Referenzbildung zwischen Aufgaben innerhalb einer Komponente (C ) definiert werden.

8. Computerimplementiertes Verfahren (20) nach einem der vorstehenden Ansprüche, wobei der rekursive Algorithmus (AM) die Rekursionsvorschrift berücksichtigt, dass einzelne Merkmale (val) nur in Verbindung mit bestimmten Datenkonstellationen aktiv oder für bestimmte Berechnung berücksichtigt werden.

9. Computerimplementiertes Verfahren (20) nach Anspruch 8, wobei eine bestimmte zu berücksichtigende Berechnung eine bestimmte Aufgabe ist, welche nur unter bestimmten Bedingungen anfällt.

10. Computersystem (10) zur Ausführung eines Verfahrens nach einem der Ansprüche 1 - 9, aufweisend:
Speichermodul zur Ablage der Systembeschreibung (SD),
Softwaremodul (SE) zur Editierung der Systembeschreibung (SD), wobei das System zunächst hierarchisch in einzelne Komponenten und Subkomponenten bis zu einer atomaren Basisstruktur (CS) aufgeteilt wird und die einzelnen Komponenten und Subkomponenten beschrieben werden, wobei die Beschreibungen der einzelnen Komponenten und Subkomponenten dann durch Definition und Kombination die hierarchische Systembeschreibung (SD) bilden,
Softwaremodul (OE) zur Organisations-Editierung mit einer Funktionalität zum Importieren, Umkopieren und Organisieren von Systembeschreibungskomponenten,
Empfangsmodul (I) zur Entgegennahme projektrelevanter Informationen (PI), automatisiert aus anderen Softwaremodulen und zur Einsortierung an die passenden Stellen der Systembeschreibung (SD), wobei für die automatisierten Abarbeitung semantisch beschrieben wird, wie, wann und welche Daten automatisch aus welchem Softwaremodul oder Datenrepository zu übernehmen sind,
Analysemodul (AM), welches automatisiert Berechnungen über alle Komponenten und Subkomponenten der Systembeschreibung ausführt und Analyseergebnisse zum Wissenstand des zu beschreibenden Systems erzeugt,
Ausgabemodul (O) zur automatisierten Ausgabe von Systembeschreibungsdaten (data) entsprechend vorgegebenen Vorschriften in bestimmten Formaten.

11. Computersystem (10) nach Anspruch 10, aufweisend ein Softwaremodul (ME) zur Editierung und Definition systemübergreifender Merkmale (val).

12. Computersystem (10) nach Anspruch 10 oder 11, aufweisend ein Softwaremodul (QE) zur Editierung einer Beschreibung von Querbezügen zwischen einzelnen Subkomponenten, insbesondere auf Basis eines vordefinierten (pre), semantischen Vokabulars.

13. Computersystem (10) nach einem der vorstehenden Ansprüche 10 bis 12, aufweisend ein Ausgabemodul (O), welches ausgestaltet ist die Systembeschreibungsdaten (data) entsprechend vorgegebenen Vorschriften an andere Systeme weiterzuleiten.
